# EUROPÄISCHE PATENTSCHRIFT

(11) **EP 0 715 811 B1**
(45) Veröffentlichungstag und Bekanntmachung des Hinweises auf die Patenterteilung: **14.05.2003**
(21) Anmeldenummer: 95119028.9
(22) Anmeldetag: 04.12.1995
(51) Int. Cl.: A21D 8/00

(54) **Vorteige für Süsshefeteige, Verfahren zu ihrer kontinuierlichen Herstellung und ihre Verwendung zur Erzeugung von Süsshefeteigprodukten**
Mother dough for sweet yeast dough, process for its continuous preparation, and its use for the preparation of sweet yeast dough products
Pâte à travail indirect pour pâte à levure sucrée, procédé pour sa préparation en continu et son utilisation pour la préparation de produits à base de pâte à levure sucrée

(30) Priorität: 05.12.1994 DE 4443230
(43) Veröffentlichungstag der Anmeldung: 12.06.1996
(73) Patentinhaber: Ferrero oHG mbH, 60599 Frankfurt (DE)
(72) Erfinder:
(74) Vertreter: Hansen, Bernd, Dr. Dipl.-Chem.

(56) Entgegenhaltungen:
- FR-A- 1 073 936
- US-A- 3 410 692
- US-A- 4 732 768
- DIBBLE W.E.: "Continuous mixing" BAKERS DIGEST, Bd. 55, Nr. 4, August 1981, Seiten 12-22, XP002097061

## Beschreibung

Die vorliegende Erfindung betrifft ein verbessertes Verfahren zur Herstellung eines Süßhefeteigs, das insbesondere dadurch gekennzeichnet ist, daß es im kontinuierlichen Betrieb unter temperierten Bedingungen ausgeführt wird.

Bei der Herstellung von Süßhefeteigen werden bisher nach traditionellen Verfahren Vorteige verwendet, die im wesentlichen aus Teigflüssigkeit (meist Milch und/oder Wasser), Mehl und Hefe in mehreren Stufen hergestellt werden. Ein erster Ansatz aus den oben erwähnten Bestandteilen wird gemischt und verknetet und ruht dann unter definierten Umgebungsbedingungen (Luftfeuchtigkeit, Temperatur) während einer bestimmten Zeit. Die Ruhezeit kann 30 Minuten bis 2 Stunden betragen. Nach Ablauf dieser Standzeit wird dem Ansatz erneut ein Teil der oben angeführten Komponenten zugeführt, und der Ansatz wird wiederum eine gewisse Zeit stehengelassen. Dieser Ablauf wird je nach Rezeptur 3 bis 5 mal wiederholt, bis alle Komponenten im Endteig enthalten sind und der Endteig fertig entwickelt ist. Der Endteig gärt und entspannt sich in einem Gärschrank, den er nach dem Formen (Ausrollen) durchläuft. Die Gärzeit beträgt ca. 45 Minuten bis 2 Stunden.

Nach dem bisherigen Verfahren werden somit Vorteige batchweise hergestellt, d.h. aus Hefe, Mehl und Milch und/oder Wasser wird ein Vorteig angesetzt, der durch wiederholte, zeitlich versetzte Zugabe der Komponenten bis zum Endteig entwickelt wird. Die Vorteigrezepturen sind grundsätzlich durch die Grundkomponenten Hefe, Teigflüssigkeit und Mehl gekennzeichnet; oft wird auch Malz zugesetzt.

Bei dieser Mehrstufenführung bestehen Variationsmöglichkeiten hinsichtlich der Ruhezeit, Anzahl der Stufen, Temperatur und Rezeptur. Diese Parameter hängen insbesondere vom gewünschten Endprodukt ab.

Im Fachartikel "Continuous Mixing" von W. E. Dibble in Bakers Digest, Band 55, Nr. 4, Seiten 12-22 wird ein Verfahren zur Vorteigherstellung beschrieben, bei dem eine Vorlösung hergestellt wird, die aus Wasser, Hefe, Zucker und weiteren Bestandteilen besteht. Diese Mischung wird anschließend über einen Zeitraum von einer Stunde fermentiert, mittels Wärmetauscher abgekühlt und nach Zusatz weiterer Vorteig-Bestandteile in einem weiteren Tank gelagert. Aus diesem Tank wird dann Vorlösung entnommen und in einen kontinuierlichen Vorteigmischer überführt. In diesem Vorteigmischer werden auch Mehl und Wasser eingespeist. Der so gemischte Vorteig wird dann zur Fermentation in einen Tank und anschließend über Kühler in einen weiteren Behälter gepumpt, in dem er gekühlt gelagert wird. Dieses Verfahren dauert recht lange und erreicht keine gleichbleibende Qualität der Endteige, zu denen die hergestellten Vorteige weiterverarbeitet werden können.

Obwohl ein solches Verfahren prinzipiell auch zur Herstellung von Süßhefeteigprodukten in größeren Mengen geeignet ist, zeigen sich doch insbesondere dann, wenn ein solches Verfahren in industriellem Maßstab eingesetzt werden soll und ein hoher Tagesdurchsatz an Rohstoffen gewünscht wird, gewisse Nachteile; d.h. es bestehen durchaus noch Verbesserungsmöglichkeiten.

Zum einen dauert das Gesamtverfahren des Standes der Technik bis zur Herstellung eines fertigen Süßhefeteigs relativ lange, was im Hinblick auf die benötigte apparative Ausstattung bzw. den Tagesdurchsatz nachteilig ist. Zum anderen wurde gefunden, daß die Aktivität der eingesetzten Hefe nicht immer optimal genutzt wird; d.h. daß verhältnismäßig große Hefemengen eingesetzt werden müssen. Darüber hinaus war auch die Porenstruktur des fertigen Süßhefeteigs oft unbefriedigend ungleichmäßig.

Im Hinblick darauf ist es ein Ziel dieser Erfindung, ein Verfahren zur Herstellung eines Vorteigs für einen Süßhefeteig bereitzustellen, das (a) eine signifikante Verkürzung der Gesamtverfahrensdauer (d.h. der Gesamtdauer aller Schritte einschließlich der Endteigherstellung) erlaubt, (b) die Gäraktivität einer gegebenen Hefemenge besser ausnutzt und daher bei im wesentlichen gleichen Einsatzmengen der anderen Rohstoffe mit einer deutlich verringerten Hefemenge auskommt, sowie (c) einen Vorteig zur Verfügung stellt, der nach seiner Weiterverarbeitung zu einem Endteig eine gleichmäßige Porenstruktur aufweist.

Die obige Aufgabe wird durch das erfindungsgemäße Verfahren zur Herstellung eines Vorteigs für einen Süßhefeteig gelöst, welches die folgenden Schritte umfaßt:
(a) kontinuierliches Einbringen von Mehl und/oder einer Vormischung aus Mehl und Malzextrakt in einen temperierten Vorteigmischer,
(b) separate Herstellung einer ersten temperierten Vorlösung aus Teigflüssigkeit und Zucker,
(c) separate Herstellung einer zweiten temperierten Vorlösung aus Teigflüssigkeit und Hefe,
(d) kontinuierliche Zugabe der Vorlösungen aus Schritt (b) und Schritt (c) in den temperierten Vorteigmischer von Schritt (a) und Mischen/Kneten der erhaltenen Mischung,
(e) Überführen der gekneteten Mischung aus Schritt (d) in einen temperierten Röhrenfermenter und Fermentieren bei kontrollierter Temperatur und Zeit.

Die Erfindung stellt weiterhin einen Vorteig für einen Süßhefeteig zur Verfügung, der durch ein kontinuierliches Verfahren herstellbar ist, das durch die obigen Schritte gekennzeichnet ist. Des weiteren stellt die vorliegende Erfindung die Verwendung eines auf diese Weise erhältlichen Vorteigs zur Herstellung eines Süßhefeteigprodukts zur Verfügung. Weitere Ausgestaltungen der vorliegenden Erfindung sind Gegenstand der Unteransprüche.

Die Komponenten des Vorteigs sind im wesentlichen Mehl, ggf. Malzextrakt, Teigflüssigkeit, Zucker und Hefe. Als Mehl ist ein beliebiges back- und verzehrgeeignetes Getreidemehl verwendbar. Bevorzugt wird Weizenmehl verwendet. Ein Malzextrakt oder Malzmehl kann dem Mehl zugesetzt werden, was die Gäraktivität der Hefe insbesondere im erfindungsgemäßen Verfahren weiter verbessern kann. Als Hefe kann eine beliebige zum Backen geeignete und zulässige Hefe in beliebiger Form verwendet werden; diese Hefen werden in aller Regel ausgewählt aus Zuchthefestämmen der Gattung Saccharomyces Cerevisiae (Bäckerhefe). Bevorzugt ist die Verwendung von Blockhefe.

Als Teigflüssigkeit kommen im wesentlichen Milch (z.B. Vollmilch, teilentrahmte Milch oder Magermilch) und/oder Wasser in Frage. Es ist aber auch möglich, z.B. Molke zu verwenden oder der Teigflüssigkeit Stoffe in geringen Mengen zuzusetzen, die sich in ihr lösen (z.B. Salz, Gärhilfsmittel), soweit diese nicht den Gär- und Backvorgang negativ beeinflussen.

Falls gewünscht, wird aus Mehl und Malzextrakt eine vorteilhafterweise möglichst homogene Vormischung hergestellt. Das Mehl bzw. diese Vormischung werden kontinuierlich abgewogen und in einen temperierten Vorteigmischer dosiert (Schritt (a)). Das Mehl oder die Trockenvormischung wird vorzugsweise bei Umgebungstemperatur zubereitet bzw. aufbewahrt. Dem Mehl können auch andere Stoffe zugesetzt sein, wie Stärke, Kleber, Kleie oder fraktionierte Mehlbestandteile.

Außerdem wird getrennt davon aus Teigflüssigkeit und Zucker eine Vorlösung bei vorteilhaft 35 bis 55°C, besonders bevorzugt 46-48°C, hergestellt und auf dieser Temperatur gehalten. Das Gewichtsverhältnis von Teigflüssigkeit und Zucker in dieser ersten Vorlösung beträgt 1:0,3 bis 1:0,7, vorzugsweise 1:0,4 bis 1:0,6 und besonders bevorzugt 1:0,5 bis 1:0,55. Diese temperierte Vorlösung wird mit an sich bekannten Pumpen und Massedurchflußmeßgeräten kontinuierlich zu der vorerwähnten Vormischung zudosiert (Schritt (b)).

Weiterhin wird aus Hefe und Teigflüssigkeit ebenfalls eine temperierte Vorlösung separat hergestellt und vorzugsweise gleichzeitig oder in einem zeitlichen Abstand ebenfalls mit Pumpen und Massedurchflußgeräten der Vormischung kontinuierlich zudosiert. D.h. die hefehaltige Vorlösung kann nach einer bevorzugten Ausführungsform zusammen mit der zuckerhaltigen Vorlösung an der gleichen Stelle des Vorteigmischers eindosiert werden oder, insoweit z.B. eine Schneckenmaschine als Vorteigmischer verwendet wird, an einer anderen Stelle als die zuckerhaltige Vorlösung. Die zweite temperierte Vorlösung aus Hefe und Teigflüssigkeit wird bei 4 bis 10°C, besonders bevorzugt bei 6°C, hergestellt und auf dieser Temperatur bis zur Zudosierung gehalten. Ist diese Temperatur zu hoch, kann die Hefe bereits im Vorbehälter zu gären beginnen; dagegen kann eine zu niedrige Temperatur die Hefe schädigen. Das Gewichtsverhältnis zwischen Teigflüssigkeit und Hefe kann beispielsweise 1:1 bis 1:3, vorzugsweise 1:1,7 bis 1:1,9, besonders bevorzugt 1:1,8 bis 1:1,85 betragen (Schritt (c)).

Als Vorteigmischer können beliebige zum kontinuierlichen Mischen/Kneten geeignete Geräte verwendet werden. Besonders bevorzugt ist der Vorteigmischer als Schneckenmaschine ausgestaltet, wobei diese Schneckenmaschine Kneteinsätze enthalten kann. Zur Erzielung möglichst konstanter Vorteigqualitäten ist es wichtig, daß die Mischtemperatur, d.h. die Temperatur der Komponenten im Vorteigmischer während des Mischens, so konstant wie möglich gehalten wird. Vorteilhafterweise wird die Temperatur des Vorteigs durch die individuell temperierten Komponenten bestimmt und durch Temperierung des Kneters bei dieser Temperatur konstant gehalten. Dabei werden bevorzugt die Temperaturen der eingesetzten Vorlösungen und der festen Komponente(n) in Abhängigkeit der gewünschten Gewichtsverhältnisse im Vorteig so gewählt, daß sich eine geeignete Mischtemperatur ergibt. Es ist aber auch denkbar, wenngleich weniger vorteilhaft, die Temperatur im wesentlichen durch eine geeignete Thermostatisierung des Vorteigmischers zu regeln. In der Erfindung verfolgt die Temperierung des Mischers/Kneters auch das Ziel, die beim Mischen entstehende Wärme abzuführen. Die Mischtemperatur beträgt vorteilhaft 32 bis 40°C und besonders bevorzugt 35 bis 37°C (Schritt (d)). Die Verweilzeit im temperierten kontinuierlichen Vorteigmischer (Mischzeit) kann 0,5 bis 3 Minuten betragen und liegt vorzugsweise bei 1 bis 2 Minuten.

Das Mischungsverhältnis zwischen der Vorlösung aus Teigflüssigkeit und Zucker und der festen Komponente (Mehl bzw. der Mischung aus Mehl und Malzextrakt) kann je nach Rezeptur im Bereich von z.B. 1:0,8 bis 1:1,2, bevorzugt 1:0,9 bis 1:1,1 variieren und beträgt besonders bevorzugt 1:1 Gewichtsteile. Das Mischungsverhältnis zwischen der zweiten temperierten Vorlösung aus Hefe und Teigflüssigkeit und der festen Komponente bzw. der festen Vormischung kann z.B. 1:2,5 bis 1:3,5 betragen und liegt vorteilhaft bei 1:3,0 bis 1:3,2 und besonders bevorzugt bei 1:3,1. Soweit nicht anders angegeben, sind alle in dieser Beschreibung verwendeten Verhältnisangaben gewichtsbezogen.

Nach der kontinuierlichen Zugabe der beiden Vorlösungen zur festen Vormischung und dem Mischen und Kneten der Mischung während einer bestimmten Zeit wird der Vorteig kontinuierlich, vorzugsweise mittels einer Exzenterschneckenpumpe, entnommen, in einen temperierten Röhrenfermenter überführt und dort fermentiert (Schritt (e)). Der Röhrenfermenter ist vorzugsweise doppelwandig ausgeführt, wobei ein geeignetes Temperiermedium, insbesondere Wasser oder ein geeignetes Öl, im Mantel fließt. In einer vorteilhaften Ausgestaltung besteht der Röhrenfermenter aus mehreren parallel geschalteten Röhren, um eine möglichst großflächige Fermentation zu erreichen. Wichtig für das Fermentationsergebnis ist eine möglichst gleichmäßige Temperatur und eine konstante Verweilzeit (Fermentationszeit). Die Temperatur im Röhrenfermenter sollte im Bereich von 32 bis 40°C, vorzugsweise 35 bis 37°C, liegen und konstant gehalten werden. In einer bevorzugten Ausführungsform sind die Misch- und Fermentationstemperatur gleich. Die Verweilzeit im Fermenter kann im Bereich von 20 bis 60 min liegen und beträgt bevorzugt 30 Minuten. Weiterhin ist der Röhrenfermenter am Auslauf vorzugsweise mit einem Druckhalteventil versehen. Das Druckhalteventil hält den Röhrenfermenter unter Druck und ermöglicht so ein vollständig gefülltes Rohr ohne Blasenbildung aufgrund von Hefegärung, was einen guten und gleichmäßigen Wärmeaustausch ermöglicht, und trägt daher zu einem gleichmäßigen vorteilhaften Produktionsergebnis bei.

Der durch das vorgenannte Verfahren herstellbare Vorteig ist ständig "frisch", d.h. die Hefe hat eine gleichbleibende optimale Gäraktivität. Im Gegensatz zum Batchbetrieb altert der Teig nicht während der Verarbeitung. Diese "Alterung" war ebenfalls ein Nachteil des traditionellen Herstellungsverfahrens und kann die Backergebnisse negativ beeinflussen. Insbesondere führt ein unterschiedliches Alter der Vorteige dazu, daß der Endteig unterschiedliche Dichten hat. Bei einem Ansatz wird ein gleichmäßiger Endteig erhalten, beim nächsten Ansatz ist der Endteig locker, dann wieder zu stark verdichtet usw.. Eine gleichbleibende Qualität des Endteigs war somit nicht gewährleistet.

Nach Verlassen des Röhrenfermenters kommt der fertige Vorteig mit weiterem Mehl und Teigflüssigkeit und gegebenenfalls gemeinsam mit einer oder mehreren weiteren Komponenten, z.B. Zucker, Milchpulver, Magermilchpulver, Stärke, Süß- und Sauermolkepulver, Vollei, Eiweiß und/oder Eigelb, Eipulver, Kleber, Kleie, Kakaomasse, Butterfett, Butteröl, Salz, Vanillin, Aromen, pflanzlichen und/oder tierischen Fetten, Getreidebestandteilen, Reismehl, Keragin, Johannisbrotmehl, (ballast)faserhaltigen Stoffen - je nach Rezeptur - in einen kontinuierlichen Endteigkneter, der vorzugsweise wiederum temperiert ist. Über eine Formstation, vorzugsweise eine Ausrollstation, gelangt der Teig dann in einen Gärtunnel, wo er bei kontrollierter Feuchtigkeit, Temperatur und Zeit gärt und dann in bekannter Weise, z.B. durch Füllen, Überziehen (z.B. durch Fett- und/oder Zuckerglasur oder durch Schokolade) und Dekorieren, zu einem verzehrfertigen Süßhefeteigprodukt weiterverarbeitet wird.

Dabei erbringt ein erfindungsgemäß hergestellter Vorteig mit seiner optimalen Hefeaktivität den unerwarteten Vorteil, daß die Gärzeiten des fertig angemischten Endteigs im Gärtunnel gegenüber dem Batchverfahren bei gleicher Grundrezeptur verringert werden können. Ein weiterer unerwarteter Vorteil des erfindungsgemäßen Verfahrens ist, daß die eingesetzte Menge an Frischhefe verringert werden kann, wobei diese Verringerung bis zu 35 % beträgt. Des weiteren führt dieses Verfahren im Endprodukt zu einer Struktur mit gleichmäßigen kleinen Poren und zu einer glatten ebenen Teigoberfläche, mithin also zu einer verbesserten Produktqualität. Die Schwankungen im spezifischen Gewicht von verschiedenen erfindungsgemäß hergestellten Süßhefeteigen mit der gleichen Rezeptur liegen nach dem Backen innerhalb ±0,5%, wohingegen sie bei einem Verfahren des Standes der Technik in der Größenordnung von 3-5% liegen.

Darüber hinaus zeichnet sich das erfindungsgemäße kontinuierliche Verfahren auch dadurch aus, daß die dazu erforderlichen Apparate sehr einfach und effizient durch z.B. Druckwasser oder Wasserdampf gereinigt oder sterilisiert werden können.

Die vorliegende Erfindung wird nun anhand eines Beispiels und eines Vergleichsbeispiels erläutert:

### Ausführungsbeispiel (erfindungsgemäßes Verfahren)

Aus Milch (3,5% Fett) und Zucker im Gewichtsverhältnis von 1:0,54 wird bei 47°C (± 1°C) eine erste Vorlösung hergestellt und bei dieser Temperatur gehalten. Weiterhin wird aus Milch und Hefe im Gewichtsverhältnis von 1:1,84 eine zweite Vorlösung hergestellt und bei 6°C gekühlt aufbewahrt.

In einen Schneckenmaschinen-Vorteigmischer mit Kneteinbauten wird eine Vormischung aus 1 Teil Malzextrakt und 200 Teilen Mehl bei Raumtemperatur gegeben und dazu die beiden obigen Vorlösungen in den folgenden Gewichtsverhältnissen zudosiert:
Milch/Zucker-Vorlösung: feste Vormischung = 1:1
Milch/Hefe-Vorlösung: feste Vormischung = 1:3

Bei laufendem Vorteigmischer beträgt die Verweilzeit im Mischerraum etwa 1,5 Minuten. Die Temperatur des Vorteigs im Mischer beträgt 36°C ± 1°C.

Die gemischte/geknetete Mischung wird mittels einer Exzenterschneckenpumpe kontinuierlich in einen doppelwandigen Röhrenfermenter überführt, der mit Wasser auf eine Temperatur von 36°C ± 1°C temperiert wird. Der Röhrenfermenter ist am Auslauf mit einem Druckhalteventil versehen. Im Röhrenfermenter wird der Vorteig kontinuierlich fermentiert, wobei die Verweilzeit des Vorteigs im Fermenter 30 Minuten beträgt.

Dann wird der Vorteig in an sich bekannter Weise durch Zusatz von weiterem Mehl, Zucker, Milch und Zusatzstoffen zum Endteig weiterverarbeitet, welcher dann geformt und bei kontrollierter Temperatur, Feuchtigkeit und Zeit im Gärtunnel fermentiert und anschließend gebacken wird.

### Vergleichsbeispiel (Batch-Verfahren)

Die gleichen Komponenten wie im kontinuierlichen Verfahren werden eingesetzt. Ein Ansatz aus den erwähnten Bestandteilen wird gemischt und verknetet und ruht sodann bei kontrollierter Temperatur (36°C) 1,5 Stunden. Nach Ablauf dieser Standzeit wird dem Ansatz erneut ein Teil der o.a. Komponenten zugeführt und entsprechend behandelt. Dieser Ablauf wird mehrmals wiederholt (4 Ansätze), bis alle Komponenten im Endteig enthalten sind. Die Weiterverarbeitung des Vorteigs erfolgt genau nach den Bedingungen des Ausführungsbeispiels.

Die folgende Tabelle vergleicht summarisch die Ergebnisse beider Verfahren:

| | Beispiel | Vergleichsbeispiel |
|---|---|---|
| Gesamtzeit des Verfahrens bis zum fertig gebackenen Süßhefeteig | 120 min | 5 bis 6 h |
| Gärzeit des Endteigs | ca. 45 min | ca. 60 min |
| Herstellungszeit des Vorteigs | ca. 30 min | 3 h |
| Hefeanteil im Endteig | 2% | 2,7% |
| Schwankungen im spezifischen Gewicht zwischen verschiedenen Chargen | ±0,5% | ±3-5% |

Aus diesem Vergleich gehen die beschriebenen Vorteile des erfindungsgemäßen Verfahrens über ein Verfahren des Standes der Technik deutlich hervor. Besonders markant ist in diesem Beispiel die deutlich verringerte Gesamtzeit des Verfahrens bis zum fertigen Süßhefeteig; aber auch die zur Herstellung des Endteigs erforderliche Hefemenge ist im kontinuierlichen Verfahren deutlich geringer.

## Patentansprüche

1. Verfahren zur kontinuierlichen Herstellung eines Vorteigs für einen Süßhefeteig, umfassend die folgenden Schritte:
(a) kontinuierliches Einbringen von Mehl und/oder einer Vormischung aus Mehl und Malzextrakt in einen temperierten Vorteigmischer,
(b) separate Herstellung einer ersten temperierten Vorlösung aus Teigflüssigkeit und Zucker,
(c) separate Herstellung einer zweiten temperierten Vorlösung aus Teigflüssigkeit und Hefe,
(d) kontinuierliche Zugabe der Vorlösungen aus Schritt (b) und Schritt (c) in den temperierten Vorteigmischer von Schritt (a) und Mischen/Kneten der erhaltenen Mischung,
(e) Überführen der gekneteten Mischung aus Schritt (d) in einen temperierten Röhrenfermenter und Fermentieren bei kontrollierter Temperatur und Zeit.

2. Verfahren gemäß Anspruch 1, **dadurch gekennzeichnet, daß** das Mehl bzw. die Vormischung von Schritt (a) bei Umgebungstemperatur zubereitet und aufbewahrt wird.

3. Verfahren gemäß einem oder mehreren der vorhergehenden Ansprüche, **dadurch gekennzeichnet, daß** die Temperatur der Vorlösung von Schritt (b) bei 35 bis 55°C, vorzugsweise 46 bis 48°C gehalten wird.

4. Verfahren gemäß einem oder mehreren der vorhergehenden Ansprüche, **dadurch gekennzeichnet, daß** die Temperatur der Vorlösung von Schritt (c) bei 4 bis 10°C, vorzugsweise bei 6°C gehalten wird.

5. Verfahren gemäß einem oder mehreren der vorhergehenden Ansprüche, **dadurch gekennzeichnet, daß** die Misch-/Knetzeit 0,5 bis 3, vorzugsweise 1 bis 2 Minuten beträgt.

6. Verfahren gemäß einem oder mehreren der vorhergehenden Ansprüche, **dadurch gekennzeichnet, daß** die Temperatur während des Mischens/Knetens konstant bei 32 bis 40°C, vorzugsweise 35 bis 37°C gehalten wird.

7. Verfahren gemäß einem oder mehreren der vorhergehenden Ansprüche, **dadurch gekennzeichnet, daß** die Temperatur während des Fermentationsprozesses konstant bei 32 bis 40°C, vorzugsweise 35 bis 37°C gehalten wird.

8. Verfahren gemäß Anspruch 7, **dadurch gekennzeichnet, daß** die Fermentationstemperatur identisch ist mit der Mischtemperatur gemäß Anspruch 6.

9. Verfahren gemäß einem oder mehreren der vorhergehenden Ansprüche, **dadurch gekennzeichnet, daß** die Temperaturen der festen und flüssigen Komponenten von Schritt (a), (b) und (c) in Anspruch 1 so gewählt werden, daß sie in Abhängigkeit der gewünschten Gewichtsverhältnisse dieser Komponenten eine Mischtemperatur im Vorteigmischer von 32 bis 40°C, vorzugsweise 35 bis 37°C ergeben.

10. Verfahren gemäß einem oder mehreren der vorhergehenden Ansprüche, **dadurch gekennzeichnet, daß** die Teigflüssigkeit Milch und/oder Wasser ist.

11. Verfahren gemäß einem oder mehreren der vorhergehenden Ansprüche, **dadurch gekennzeichnet, daß** die Fermentationsdauer des Vorteigs in Schritt (e) 20 bis 60 Minuten, vorzugsweise 30 Minuten, beträgt.

12. Verfahren gemäß einem oder mehreren der vorhergehenden Ansprüche, **dadurch gekennzeichnet, daß** der Vorteig im Röhrenfermenter durch ein Druckhalteventil unter Druck gehalten wird.

13. Süßhefevorteig, erhältlich durch ein kontinuierliches Verfahren gemäß einem oder mehreren der vorhergehenden Ansprüche.

14. Verwendung eines Vorteigs gemäß Anspruch 13 zur Herstellung eines Süßhefeteigprodukts.

## Claims

1. Process for continuous production of a pre-dough for a sweet yeast dough comprising the following steps:
(a) continuous introduction of flour and/or a pre-mixture of flour and malt extract into a tempered pre-dough mixer.
(b) separate production of a first tempered pre-solution of dough liquid and sugar,
(c) separate production of a second tempered pre-solution of dough liquid and yeast,
(d) continuous addition of the pre-solutions from step (b) and step (c) into the tempered pre-dough mixer of step (a) and mixing/kneading of the mixture obtained,
(e) transferring the kneaded mixture from step (d) to a tempered tubular fermenter and fermenting at controlled temperature and time.

2. Process according to claim 1, **characterised in that** the flour or the pre-mixture of step (a) is prepared and stored at ambient temperature.

3. Process according to one or more of the preceding claims, **characterised in that** the temperature of the pre-solution of step (b) is kept at 35 to 55°C, preferably 46 to 48°C.

4. Process according to one or more of the preceding claims, **characterised in that** the temperature of the pre-solution of step (c) is kept at 4 to 10°C, preferably at 6°C.

5. Process according to one or more of the preceding claims, **characterised in that** the mixing/kneading time is 0.5 to 3, preferably 1 to 2 minutes.

6. Process according to one or more of the preceding claims, **characterised in that** the temperature during mixing/kneading is kept constant at 32 to 40°C, preferably 35 to 37°C.

7. Process according to one or more of the preceding claims, **characterised in that** the temperature during the fermentation process is kept constant at 32 to 40°C, preferably 35 to 37°C.

8. Process according to claim 7, **characterised in that** the fermentation temperature is identical to the mixing temperature according to claim 6.

9. Process according to one or more of the preceding claims, **characterised in that** the temperatures of the solid and liquid components of step (a), (b) and (c) in claim 1 are selected so that they produce a mixing temperature in the pre-dough mixer of 32 to 40°C, preferably 35 to 37°C, as a function of the required weight ratios of these components.

10. Process according to one or more of the preceding claims, **characterised in that** the dough liquid is milk and/or water.

11. Process according to one or more of the preceding claims, **characterised in that** the fermentation period of the pre-dough in step (e) is 20 to 60 minutes, preferably 30 minutes.

12. Process according to one or more of the preceding claims, **characterised in that** the pre-dough is kept under pressure in the tubular fermenter by a pressure-retaining valve.

13. Sweet yeast pre-dough which can be obtained by a continuous process according to one or more of the preceding claims.

14. Use of a pre-dough according to claim 13 for producing a sweet yeast dough product.

## Revendications

1. Procédé de production continue d'une pâte à travail indirect pour une pâte à levure sucrée, comprenant les étapes consistant à :
(a) introduire de manière continue de la farine et / ou un prémélange de farine et d'un extrait de malt dans un mélangeur de pâte à travail indirect, à température contrôlée,
(b) préparer séparément à température contrôlée une première solution préliminaire constituée de liquide pour pâte et de sucre,
(c) préparer séparément à température contrôlée une seconde solution préliminaire constituée de liquide pour pâte et de levure,
(d) introduire en continu les solutions préliminaires préparées à l'étape (b) et à l'étape (c) dans le pré-mélangeur de l'étape (a) à température contrôlée et malaxer / pétrir le mélange obtenu,
(e) transférer le mélange pétri obtenu à l'étape (d) dans un fermenteur tubulaire à température contrôlée et fermenter à une température et pendant une durée contrôlées.

2. Procédé selon la revendication 1, **caractérisé en ce que** la farine ou le prémélange de l'étape (a) est préparé et conservé à la température ambiante.

3. Procédé selon une ou plusieurs des revendications précédentes, **caractérisé en ce que** la température de la solution préliminaire de l'étape (b) est maintenue dans la plage allant de 35 à 55 °C et, de préférence, de 46 à 48 °C.

4. Procédé selon une ou plusieurs des revendications précédentes, **caractérisé en ce que** la température de la solution préliminaire de l'étape (c) est maintenue dans la plage allant de 4 à 10 °C et, de préférence, à 6 °C.

5. Procédé selon une ou plusieurs des revendications précédentes, **caractérisé en ce que** la durée du malaxage / pétrissage est dans la plage allant de 0,5 à 3 et, de préférence, de 1 à 2 minutes.

6. Procédé selon une ou plusieurs des revendications précédentes, **caractérisé en ce que** la température pendant le malaxage / pétrissage est maintenue constante dans la plage allant de 32 à 40 °C et, de préférence, de 35 à 37 °C.

7. Procédé selon une ou plusieurs des revendications précédentes, **caractérisé en ce que** la température durant le processus de fermentation est maintenue constante dans la plage allant de 32 à 40 °C et, de préférence, de 35 à 37 °C.

8. Procédé selon la revendication 7, **caractérisé en ce que** la température de fermentation est identique à la température de malaxage selon la revendication 6.

9. Procédé selon une ou plusieurs des revendications précédentes, **caractérisé en ce que** les températures des composants solides et liquides des étapes (a), (b) et (c) dans la revendication 1 sont choisies de manière à ce que l'on ait - selon les rapports pondéraux choisis pour ces composants - une température dans le mélange du mélangeur de pâte à travail indirect dans la plage allant de 32 à 40 °C et, de préférence, de 35 à 37 °C.

10. Procédé selon une ou plusieurs des revendications précédentes, **caractérisé en ce que** le liquide pour pâte est le lait et / ou l'eau.

11. Procédé selon une ou plusieurs des revendications précédentes, **caractérisé en ce que** la durée de fermentation de la pâte à travail indirect à l'étape (e) est dans la plage allant de 20 à 60 minutes et, de préférence, elle est de 30 minutes.

12. Procédé selon une ou plusieurs des revendications précédentes, **caractérisé en ce que** la pâte à travail indirect dans le fermenteur tubulaire est maintenue sous pression, grâce à une soupape maintenant la pression.

13. Pâte à travail indirect à levure sucrée obtenue par un procédé continu selon une ou plusieurs des revendications précédentes.

14. Utilisation d'une pâte à travail indirect selon la revendication 13 pour préparer un produit à base de pâte à levure sucrée.
